(19) **Europäisches Patentamt**

**European Patent Office**

**Office européen des brevets**

(11) **EP 0 701 379 B1**

(12) **EUROPÄISCHE PATENTSCHRIFT**

(45) Veröffentlichungstag und Bekanntmachung des Hinweises auf die Patenterteilung:
**24.05.2000 Patentblatt 2000/21**

(51) Int Cl.⁷: $H04N\ 9/75$

(21) Anmeldenummer: **95202321.6**

(22) Anmeldetag: **28.08.1995**

(54) **Verfahren und Schaltungsanordnung zum Farbstanzen**

Process and circuit arrangement for color keying

Méthode et appareil pour la commutation de couleur

(84) Benannte Vertragsstaaten:
**DE FR GB**

(30) Priorität: **10.09.1994 DE 4432337**

(43) Veröffentlichungstag der Anmeldung:
**13.03.1996 Patentblatt 1996/11**

(73) Patentinhaber:
• **Philips Corporate Intellectual Property GmbH**
**52064 Aachen (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder: **Gehrmann, Rainer, Dipl.-Ing.,**
**c/o Philips**
**D-22335 Hamburg (DE)**

(74) Vertreter: **Volmer, Georg, Dipl.-Ing. et al**
**Philips Corporate Intellectual Property GmbH,**
**Habsburgerallee 11**
**52064 Aachen (DE)**

(56) Entgegenhaltungen:
**DE-A- 4 017 878          GB-A- 2 262 860**
**GB-A- 2 263 040          GB-A- 2 270 439**

**Beschreibung**

Die Erfindung bezieht sich auf ein Verfahren und eine Schaltungsanordnung zum Farbstanzen.

Unter Farbstanzen (Chroma-Key) im weitesten Sinne versteht man die Mischung zweier Fernsehbilder zu einem Gesamtbild mit folgendem Ziel: Der Vordergrund (Foreground FG) des ersten Videobildes soll möglichst fehlerfrei vor dem zweiten Fernsehbild als Hintergrund erscheinen (vergleiche hierzu z.B. die DE 40 17 878 A1).

Damit die Mischung der beiden Bilder automatisch erfolgen kann, sollte der Hintergrund des ersten Videobildes möglichst einfarbig sein. Meistens wird hierfür die Farbe blau verwendet; sie wird Stanzfarbe (Key-Colour KC) genannt. Der Vordergrund des ersten Videobildes darf diese Farbe nicht enthalten, weil sonst im Gesamtbild unübersehbare Fehler erscheinen würden. Beim Mischvorgang wird nämlich die Farbinformation des ersten Videobildes bildpunktweise abgefragt. Entspricht die Farbinformation eines Bildpunktes der Stanzfarbe, wird dieser Bildpunkt durch die Daten des korrespondierenden Bildpunktes (s. Begriffserkärung auf Seite 4, Punkt 5) des zweiten Videobildes ersetzt. Käme die Stanzfarbe im Vordergrund vor, erschiene er im Gesamtbild an diesen Stellen durchsichtig.

Verfeinerungen des Verfahrens bestehen z. B. darin, statt einer einzigen Stanzfarbe auch Nuancen davon für den Hintergrund des ersten Videobildes zuzulassen. Diese Nuancen dürfen ebenfalls im Vordergrund des ersten Videobildes aus den genannten Gründen nicht auftreten und auch darum nicht, weil sonst das einfache Kriterium für die automatische Unterscheidung zwischen Vordergrund und Hintergrund verloren gehen würde.

Erschwerend bei der Unterscheidung zwischen Vordergrund und Hintergrund ist das Phänomen der Übergangsfarben bei Videobildern. Übergangsfarben treten in Videobildern z.B. an Kanten zwischen Vordergrundobjekten und der Stanzfarbe des Hintergrunds der FG-Szene auf. Unterstellt man der Einfachheit halber eine blaue Stanzfarbe und einen roten Vordergrund, so gibt es zwischen Vordergrung und Hintergrund auf der Bildfläche ein Übergangsgebiet, in dem die Farben von Rot über Purpur nach Blau verlaufen. Ursache dieser Übergangsfarben ist z.B. eine optische Unschärfe der Videokamera oder eine Filterung der Videobilder.

Werden die Bildpunkte eines solchen Übergangsgebietes nicht durch korrespondierende Bildpunkte des zweiten Videobildes ersetzt, also vom Farbstanzen ausgenommen, so erscheinen die Gegenstände des Vordergrundes auf dem Gesamtbild unter anderem mit einer störenden bläulichen oder purpurfarbenen Umrandung. Diese Bildpunkte des Übergangsgebietes lassen sich andererseits auch nicht vollständig durch korrespondierende Bildpunkte des zweiten Videobildes ersetzen, da das Ergebnis dann unnatürlich hart aussehen würde.

Für einige Farbübergänge (Rot-Blauübergang oder Grün-Blauübergang) läßt sich in der zweidimensionalen Farbebene der Stanzfarbanteil bestimmen. Diesen Übergangsfarben ist gemeinsam, daß sie gewissermaßen vektorielle Querkomponenten zum Vektor der Stanzfarbe aufweisen und sich über dieses Merkmal in vektorielle Grundkomponenten aufspalten lassen. Eine solche Methode versagt aber typischerweise, wenn der Farbübergang diametral über den Unbuntpunkt durch die Farbebene geht, also beispielsweise von Gelb über

Unbunt nach Blau. Die gelbe Farbe hat nämlich eine zur blauen Stanzfarbe inverse Richtung. Jeder beliebige Summenvektor dieser beiden Farbvektoren bildet daher kein Parallelogramm mehr und läßt sich also nicht mehr auf einfache Weise in seine Grundkomponenten zerlegen. Es läßt sich in grauen Übergangsbereichen also kein Wert für die Stanzfunktion (vgl. weiter unten) angeben. Graue Ränder von gelben FG-Objekten nach dem Farbstanzen sind die zwangsläufige Folge.

Der Erfindung liegt die Aufgabe zugrunde, ein umfassendes und allgemeingültiges Verfahren und eine Schaltungsanordnung zur Behandlung aller Übergangsfarben beim Farbstanzen anzugeben.

Zur Festlegung der bisher und im folgenden verwendeten Begriffe wie "Farbraum", "Farbvektor eines Bildpunktes" oder "korrespondierende Bildpunkte" u.a. werden nachstehende Vereinbarungen getroffen:

1. Unter Farbinformation eines Bildpunktes im weiteren Sinne werden die beiden Chrominanzwerte Cb und Cr und der Luminanzwert Y verstanden. Unter Farbinformation im engeren Sinne werden nur die beiden Chrominanzwerte Cb und Cr verstanden. Wird allgemein von Farbinformation gesprochen, sind die gemachten Aussagen für beide Fälle zutreffend.

2. Die Farbinformation eines Bildpunktes wird als Punkt P eines Farbraumes mit einem kartesischen Koordinatensystem angesehen, dessen Koordinaten durch die Farbinformation des Bildpunktes festgelegt sind. Farbinformationen im weiteren Sinne sind Punkte im dreidimensionalen Farbraum $FR_3$ und Farbinformationen im engeren Sinne sind Punkte im zweidimensionalen Farbraum $FR_2$. Wird allgemein vom Farbraum gesprochen, ist die Aussage von der Dimension unabhängig.

3. Punkte im Farbraum werden auch als Vektoren (Farbvektoren) vom Nullpunkt des Achsensystems zum Punkt P des Raumes angesehen. Zwischen Punkt und Vektor wird daher nicht immer streng unterschieden. Vektoren werden durch Fettdruck symbolisiert und in den Figuren durch eine Pfeilspitze an ihrem Ende angedeutet. **x** ist also eine Abkürzung für $(x_1, x_2, x_3)$, falls es sich um einen Farbvektor (Punkt) im $FR_3$ und eine Abkürzung für $(x_1,$

$x_2$), falls es sich um einen Farbvektor (Punkt) im $FR_2$ handelt. $x_1$ ist die zugehörige Cb-Komponente, $x_2$ die Cr-Komponente und $x_3$ die Y-Komponente des Vektors **x**. Der Sinn der Redeweise "Farbvektor eines Bildpunktes" geht aus dem Gesagten unmittelbar hervor. Gleiches gilt für die Redeweise "Farbvektoren eines Videobildes oder von Teilen eines Videobildes". Derjenige Teil des Farbraumes, zu dem die Stanzfarben gehören, wird Stanzgebiet genannt.

4. Skalarprodukte zweier Vektoren werden mit **a•b** abgekürzt. Ihre Bedeutung ist

$$(1) \qquad a \cdot b = \Sigma a_i b_i \,,$$

wobei der Summationsindex i für Vektoren des Raumes $FR_2$ von 1 bis 2 und für Vektoren des Raumes $FR_3$ von 1 bis 3 läuft. Unter dem Betrag eines Vektors |**a**| wird seine Euklidische Norm verstanden, nämlich

$$(2) \qquad |a| = \sqrt{\Sigma a^2_i} \,.$$

Für den Summationsindex gilt das gleiche wie beim skalaren Produkt.

5. Zwei Bildpunkte, die zu zwei verschiedenen Videobildern gehören, werden dann als korrespondierend bezeichnet, wenn sie auf der Bildfläche die gleichen geometrischen Koordinaten haben.

Die dem erfindungsgemäßen Verfahren zugrunde liegende Aufgabe wird durch folgende Verfahrensschritte gelöst:

a) Der Farbraum wird durch ein [n - 1]-dimensionales Grenzgebiet derart in zwei Teilräume geteilt, daß der erste Teilraum das Stanzgebiet und mögliche Übergangfarben enthält, während in den zweiten Teilraum und in das Grenzgebiet die Farbvektoren des ersten Videobildes fallen, die zu dessen Vordergrund gehören,

b) für einen Farbvektor $\mathbf{p}_1$, der in den ersten Teilraum fällt, wird mit einem Farbvektor **KC** des Stanzgebietes der Wert einer Stanzfunktion $k(\mathbf{p}_1)$ ($0 \leq k(\mathbf{p}_1) \leq 1$) durch die Forderung bestimmt, daß der Endpunkt des Vektors $\mathbf{p}_1 - k(\mathbf{p}_1)\mathbf{KC}$ in das Grenzgebiet fällt.

Bei der Erfindung wird von der Vermutung ausgegangen, daß Übergangsfarben durch additive Farbmischung zwischen einer Vordergrundfarbe des ersten Bildes und einem noch zu ermittelnden Anteil einer Farbe **KC** des Stanzgebiets entstanden sein könnten. Dieser Anteil - hier als Wert einer sogenannten Stanzfunktion $k(\mathbf{p}_1)$ an der Stelle $\mathbf{p}_1$ bezeichnet - wird für eine Übergangsfarbe $\mathbf{p}_1$ nach den oben angegebenen Vorschriften bestimmt.
Die oben geäußerte Vermutung bedeutet auch, daß die Werte der Stanzfunktion $k(\mathbf{p}_1)$ positive Zahlen mit $0 \leq k(\mathbf{p}_1) \leq 1$ sein müssen. An manchen Stellen wird das Argument $\mathbf{p}_1$ der Stanzfunktion k der Kürze wegen fortgelassen.
Durch die mögliche Einbeziehung der Luminanz-Komponente in die erfindungsgemäße Behandlung von Übergangsfarben werden Probleme lösbar, die sich im Zweidimensionalen (vgl. oben) nicht auf einfache Weise lösen ließen.
Ist eine Stanzfunktion erst einmal ermittelt, ergibt sich das Gesamtbild dadurch, daß der Farbvektor $\mathbf{p}_3$ eines Bildpunktes des Gesamtbildes, der zu einem Bildpunkt des ersten Videobildes mit der Übergangsfarbe $\mathbf{p}_1$ und zu einem Bildpunkt des zweiten Videobildes mit dem Farbvektor $\mathbf{p}_2$ korrespondiert, nach der Gleichung

$$p_3 = p_1 - k(p_1)KC + k(p_1)p_2$$

bestimmt wird.
Diese Gleichung ist z.B. aus Document GB-A-2 263 040 bekannt.
Der Anteil $k(\mathbf{p}_1)$ der Stanzfarbe **KC** an einer Übergangsfarbe $\mathbf{p}_1$ wird also von ihr abgezogen. Damit ist die Farbmischung rückgängig gemacht. Gleichzeitig wird der gleiche Anteil einer Farbe $\mathbf{p}_2$ des zweiten Videobildes hinzuaddiert.
Anhand der Figuren soll die Erfindung und ein Ausführungsbeispiel von ihr nun näher erläutert werden.

Fig. 1 dient der Erläuterung der Erfindung in ihrer allgemeinsten Form für einen zweidimensionalen Farbraum, also für eine Farbebene,

Fig. 2 dient der Erläuterung eines speziellen Ausführungsbeispiels der Erfindung im dreidimensionalen Farbraum,

Fig. 3 dient der geometrischen Veranschaulichung von Winkeln, durch die eine Stanzfarbe festgelegt wird, und

Fig. 4 zeigt eine Schaltungsanordnung zur Berechnung einer Stanzfunktion.

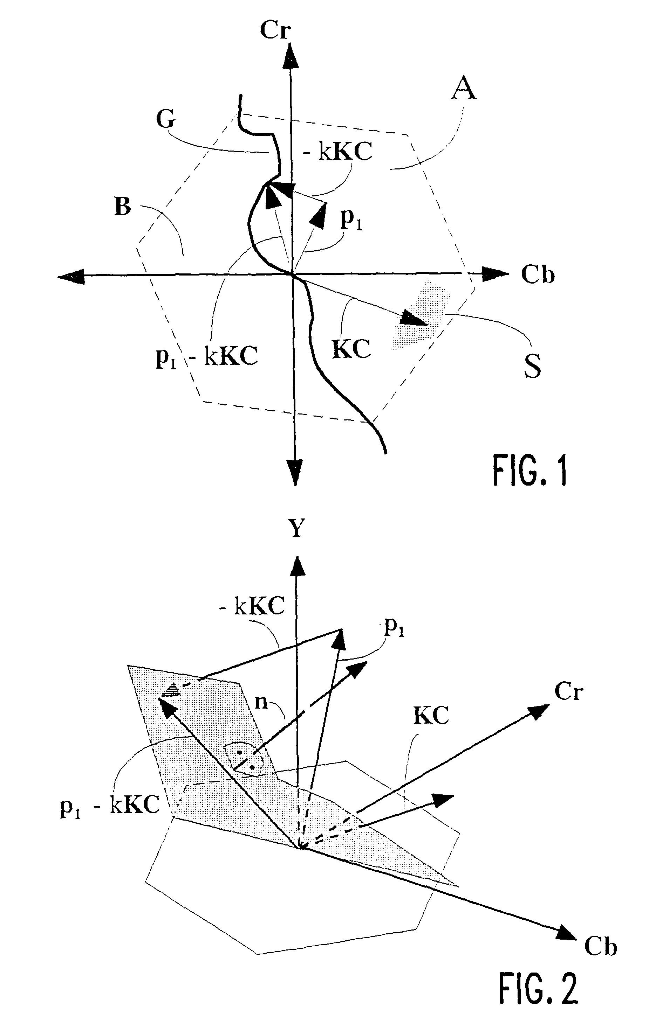

Fig. 1 zeigt den zweidimensionalen Farbraum $FR_2$ - im folgenden wie üblich auch Farbebene genannt - mit dem allgemein vereinbarten Koordinatensystem Cb und Cr, dessen Ursprung mit dem Schwarzpunkt zusammenfällt.

Zur Orientierung ist ein Sechseck eingetragen, auf dessen Ecken - angefangen beim ersten Quadranten der Farbebene - die Farben purpur, rot, gelb, grün, cyan und blau liegen, wenn man das Sechseck entgegen dem Uhrzeigersinn durchläuft.

Die Farbebene $FR_2$ zeigt ein schraffiertes Gebiet, ein Stanzgebiet S und ein Grenzgebiet als Grenzkurve G. Die Grenzkurve G teilt die Farbebene $FR_2$ in zwei Teilebenen, nämlich in die Teilebenen A und B. Die Teilebene B enthält die Vordergrundfarben eines ersten Videobildes, während die Teilebene A die Stanzfarben und mögliche Übergangsfarben enthält. Nicht alle Farben der Teilebene B müssen tatsächlich als Vordergrundfarben in einem Videobild vorkommen. Auch für die Teilebene A gilt, daß nicht alle möglichen Übergangsfarben notwendig als Übergangsfarben in einem Videobild vorkommen.

Auf der Grenzkurve G liegen diejenigen Vordergrundfarben, aus denen die Übergangsfarben durch additive Farbmischung - entsprechend der oben geäußerten Vermutung - mit einer Stanzfarbe entstanden sind.

Hat der Farbvektor $\mathbf{p}_1$ eines Bildpunktes die eingezeichnete Lage - es handelt sich bei diesem Vektor also um eine tatsächlich vorkommende Übergangsfarbe - so ist er aus einer Farbe des Grenzgebietes G durch Beimischung eines Vektors $\mathbf{KC}$ aus dem Stanzgebiet S entstanden. Zieht man also von $\mathbf{p}_1$ den richtigen Anteil k von $\mathbf{KC}$ ab, so liegt der Endpunkt des Farbvektors $\mathbf{p}_1$ - k$\mathbf{KC}$ auf der Grenzkurve G, d.h., der Farbvektor $\mathbf{p}_1$ - k$\mathbf{KC}$ erfüllt die Gleichung

$$(3) \qquad g(p_1 - kKC) = 0,$$

wenn g($\mathbf{x}$) = 0 die Gleichung der Grenzkurve ist. Aus der Gleichung (3) muß dann k bestimmt werden. Der Anteil k hängt unter anderm von $\mathbf{p}_1$ ab; er wird deshalb auch Stanzfunktion k($\mathbf{p}_1$) genannt. Durch Definition werden die Werte der Stanzfunktion für Punkte der Teilebene B und für die Punkte der Grenzkurve G auf null festgelegt und auf eins für die Stanzfarben. Sie ist damit für jeden Punkt des Farbraumens erklärt. Eine Stanzfunktion ist durch das Grenzgebiet G und durch den Vektor $\mathbf{KC}$ definiert. Jede Änderung des Grenzgebietes G und jede Änderung des Vektors $\mathbf{KC}$ führt im Allgemeinen zu einer anderen Stanzfunktion.

Sind z.B. zwei Bildsequenzen zu einer Gesamtbildsequenz automatisch zu mischen, so besteht die Hauptarbeit darin, eine für die gesamte Sequenz geeignete Stanzfunktion zu finden. Bei dem hier beschriebenen Vorgehen wird vorausgesetzt, daß die farbliche Zusammensetzung der Bilder der ersten Sequenz, die also den Vordergrund für die Gesamtbilder liefern sollen, für alle Bilder dieser Sequenz im Wesentlichen die gleiche ist. Ist der Vordergrund der Bilder der ersten Sequenz z.B. ein Nachrichtensprecher, trifft alles folgende nur für ein und denselben Sprecher mit ein und derselben Kleidung vor demselben (blauen) Hintergrund zu.

Zunächst wird durch exakte Messung die Stanzfarbe $\mathbf{KC}$ mit der größten Intensität ermittelt. Anschließend wird mit plausiblen Argumenten eine Grenzkurve G gefunden. Sodann werden für alle Farbpunkte $\mathbf{p}_1$ des Farbraumes die zugehörigen Werte der Stanzfunktion k($\mathbf{p}_1$) - gegebenenfalls automatisch - bestimmt. Das wiederum setzt voraus, daß die Gleichung für das Grenzgebiet (Grenzkurve) g(x) = 0, die durch die Punkte $\mathbf{p}_1$ - k$\mathbf{KC}$ erfüllt werden muß, ohne großen Aufwand nach k aufgelöst werden kann. Beispiele hierfür werden weiter unten angegeben.

Durch die Festlegung von g($\mathbf{x}$) und $\mathbf{KC}$ ist dann eine bestimmte Stanzfunktion für jeden Punkt $\mathbf{p}_1$ des Farbraumes definiert und bestimmbar. Ihre Werte können in einem Speicher abgelegt werden. Sodann wird ein Musterbild der ersten Bildsequenz mit der ermittelten Stanzfunktion verändert. Mit Musterbild ist ein Bild der ersten Bildsequenz gemeint, das die gleiche Farbzusammensetzung von Hintergrund und Vordergrund hat wie die Bilder der gesamten ersten Bildfrequenz. Darüberhinaus wird keine weitere Übereinstimmung gefordert.

Die Veränderung des Musterbildes sieht so aus, daß vom Farbvektor $\mathbf{p}_1$ eines jeden Bildpunktes dieses Musterbildes einen Anteil k($\mathbf{p}_1$)$\mathbf{KC}$ abgezogen wird, wobei k($\mathbf{p}_1$) die vorher ermittelte Stanzfunktion bedeutet. Man kann sagen, daß durch diesen Vorgang der Blauanteil des Musterbildes entfernt wird. Wie weit das durch die Wahl der Grenzkurve g und der Stanzfarbe $\mathbf{KC}$ - also durch die dadurch festgelgte Stanzfunktion - gelungen ist, wird durch visuelle Kontrolle beurteilt. Das vom Blau befreite Musterbild zeigt den Vordergrund dann vor einem schwarzen Hintergrund. Das Bild sollte so aussehen, ob nie eine Blaufarbe im Spiel gewesen wäre. Ist das nicht der Fall, wird der Vorgang mit veränderter Grenzkurve und gegebenenfalls mit einer veränderten Stanzfarbe $\mathbf{KC}$ wiederholt. Ist das Ergebnis zufriedenstellend, ist der Abgleich beendet und eine geeignete Stanzfunktion gefunden.

Die Mischung der beiden Bildsequenzen erfolgt dann automatisch mit einer Geschwindigkeit, die der Bildpunktfolgefrequenz entspricht. Ein Farbvektor $\mathbf{p}_3$ für einen Bildpunkt des Gesamtbildes ergibt sich aus den Farbvek-

toren $p_1$ und $p_2$ der korrespondierenden Bildpunkte nach der Gleichung

$$(4) \qquad p_3 = p_1 - k(p_1)KC + k(p_1)p_2$$

Für den Farbvektor $p_2$ eines Bildpunktes der zweiten Bildsequenz gilt also, daß von ihm soviel sichtbar hinzugemischt wird wie vorher Blau sichtbar war und vom Farbvektor $p_1$ abgezogen wurde.

Wie für den allgemeinsten Fall die Verhältnisse im Farbraum $FR_3$ aussehen, läßt sich ohne Schwierigkeit aus Fig. 1 erschließen. Die Punktmenge S ist in diesem Falle eine dreidimensionale und die Punktmenge G eine zweidimensionale Punktmenge.

Für den dreidimensionalen Farbraum $FR_3$ wird nun ein Ausführngsbeispiel unter folgender vereinfachender Annahme erläutert:

Das Grenzgebiet G ist eine Ebene, die durch Nullpunkt geht und deren Punkte $x$ der Gleichung

$$(5) \qquad x \cdot n = 0$$

genügen, wobei $n$ ein Vektor in der Richtung der Ebenennormale ist und der Punkt zwischen den beiden Vektoren wiederum ihr skalares Produkt andeutet. Nur Farbvektoren, die in der durch Gleichung (5) definierten Ebene liegen, sind Farbvektoren des Vordergrundes, aus denen die Übergangsfarben durch Beimischung einer Stanzfarbe $KC$ entstanden sind. Das heißt, der Vektor $p_1$ - $kKC$ muß die Ebenengleichung (5) erfüllen. Die Einsetzung von $p_1$ - $kKC$ in Gleichung (5) liefert für die zugehörige Stanzfunktion an der Stelle $p_1$ den Wert

$$(6) \qquad k(p_1) = (p_1 \cdot n):(KC \cdot n).$$

k ergibt sich also als Quotient der Skalarprodukte $p_1 \cdot n$ und $KC \cdot n$.

Die angegebenen Vereinfachungen für den $FR_3$ haben den Vorteil, daß sich die Grenzebene wegen der einfachen mathematischen Beschreibung technisch leicht realisieren läßt und daß sich die Lage der Grenzebene durch Veränderung des normalen Vektors $n$ schnell variieren läßt.

Die Auswertung der Formel (6) kann auf unterschiedliche Art geschehen. Entweder man verwendet die drei Komponenten der Vektoren $p_1$, $n$ und $KC$ und greift auf die Definition des Skalarproduktes nach Formel (1) zurück oder man führt zur Kennzeichnung der geometrischen Relationen Winkel ein. Auf die Einführung von Winkeln im Farbraum wird weiter unten näher eingegangen.

In der perspektivischen Darstellung nach Fig. 2 ist die Grenzebene durch einen schattierten Ausschnitt von ihr sichtbar gemacht. Der Raum $FR_3$ wird durch diese Ebene in zwei Teilräume geteilt. Der Teilraum, der vom Betrachter aus gesehen hinter der Ebene liegt , ist der Teilraum A und der vordere der Teilraum B. Der Normalenvektor $n$ der Ebene ist an einen Punkt der Ebene angetragen und zeigt in den Teilraum A. Der Vektor $n$ steht senkrecht auf der Ebene, d.h. auf jedem Vektor, der ganz in der Ebene liegt. Dieser Sachverhalt ist durch die beiden Bögen mit den Punkten am Anfang des Vektors $n$ angedeutet - das übliche Zeichen für rechte Winkel.

In den Teilraum A fällt auch der einzige Vektor $KC$ des Stanzgebietes. Außerdem liegt im Teilraum A der Farbvektor $p_1$ eines Bildpunktes des ersten Videobildes. Er stellt eine Übergangsfarbe dar. Von ihm wird nun der mit der Stanzfunktion k multiplizierte Vektor $KC$ abgezogen. Die Stanzfunktion k ist - wie oben dargelegt - so bestimmt, daß die Summe der Vektoren $p_1$ und -$kKC$ einen Vektor ergibt, dessen Endpunkt in der Grenzebene liegt. Dieser Differenzvektor ist in Fig. 2 mit $p_1$ - $kKC$ bezeichnet.

Etwas komplizierter ist ein Grenzgebiet, das mit Hilfe zweier sich schneidender und durch den Nullpunkt gehender Ebenen konstruiert wird. Das Grenzgebiet selbst besteht dann aus zwei Halbebenen, die durch die gemeisame Schnittgerade der Ebenen begrenzt sind. Die Gleichung für das Grenzgebiet wäre in diesem Falle gebietsweise linear (und homogen). Für beide Ebenen muß eine Ebenennormale $n_1$ bzw. $n_2$ angegeben werden. Punkte des Grenzgebietes erfüllen dann die Gleichung (5) mit $n = n_1$ oder mit $n = n_2$ oder für $n_1$ und $n_2$, wenn sie auf der Schnittgeraden der Ebenen liegen. Je nach Lage von $KC$ und $p_1$ ergibt sich für die Stanzfunktion ein Wert nach Gleichung (6) mit $n = n_1$ oder mit $n = n_2$.

Zu bemerken wäre noch, daß sich die beschriebenen Sonderfälle ohne weiteres auf den Raum $FR_2$ übertragen lassen. Die Gleichungen (1) und (2) sind formal identisch zu übernehmen. Der Unterschied besteht lediglich darin, daß alle in ihnen vorkommenden Vektoren nur zwei Komponenten haben. Gleichung (4) ist dann die Gleichung einer Geraden, die durch den Nullpunkt geht. Im komplizierteren Fall besteht das Grenzgebiet aus zwei Halbgeraden, deren Anfangspunkt der Nullpunkt ist. Die dreidimensionale Behandlung des Problems ist jedoch dann vorzuziehen, wenn man im Zweidimensionalen keine oder nur unbefriedigende Lösungen erhält.

Bei der Auswertung der Formel (6) ist zu beachten, daß zum Zwecke des Abgleichs nur die Lage der Grenzebene und in Außnahmefällen der Betrag des Vektors **KC** geändert wird. Die Änderung des Betrages von **KC** bedeutet, daß die Intensität der Stanzfarbe geändert wird (z.B. durch Verändern der Szenenbeleuchtung oder der Kamerablende). Daher ist es von Vorteil, Formel (6) so umzuformen, daß alle unabhängigen Parameter, die beim Abgleich geändert werden könnten, explizit in ihr erscheinen. Dazu denke man sich das Cb-Cr-Y-Koordinatensystem so gedreht, daß der Vektor **KC** im gedrehten Koordinatensystem die Darstellung

$$(7) \qquad KC = \{|KC|, 0, 0\}$$

bekommt. Die Komponenten eines beliebigen Vektors $\mathbf{p}_1$ im gedrehten Koordinatensystem seien mit r,s und t bezeichnet. Die Grenzebene schneidet die r-s-Ebene in einer Geraden, die mit der r-Achse einen Winkel $\alpha$ einschließt. Entsprechendes gilt für r-t-Ebene und einen Winkel $\beta$. Diese beiden Winkel legen die Grenzebene fest und können unabhängig voneinander verändert werden. Berücksichtigt man das Gesagte in Formel (6), so ergibt sich zunächst

$$(8) \qquad k(p_1) = \{r + s* n_2/n_1 + t*n_3/n_1\}/|KC|$$

mit $n_i$ als Komponenten des Vektors **n** in dem gedrehten Koordinatensystem. Diese Komponentenverhältnisse lassen sich jedoch durch die erwähnten Winkel ausdrücken. Es gilt

$$(9) \qquad n_2/n_1 = - \text{ctg } \alpha \text{ und } n_3/n_1 = - \text{ctg } \beta$$

und man erhält schließlich aus (8):

$$(10) \qquad k(p_1) = \{r - s*\text{ctg } \alpha - t*\text{ctg } \beta\}/|KC|.$$

Die Komponenten r, s und t eines Vektors $\mathbf{p}_1$ im gedrehten Koordinatensystem ergeben sich aus seinen Komponenten im Cb-Cr-Y-System durch Transformation mit der Matrix

$$(11) \qquad \begin{vmatrix} \sin\theta\cos\Phi & \sin\theta\sin\Phi & \cos\theta \\ -\sin\Phi & \cos\Phi & 0 \\ -\cos\theta\cos\Phi & -\cos\theta\sin\Phi & \sin\theta \end{vmatrix} \quad ,$$

die selbst wieder ein Produkt der beiden Matrizen

$$(12) \qquad \begin{vmatrix} \sin\theta & 0 & \cos\theta \\ 0 & 1 & 0 \\ -\cos\theta & 0 & \sin\theta \end{vmatrix} \quad \text{und} \quad \begin{vmatrix} \cos\Phi & \sin\Phi & 0 \\ -\sin\Phi & \cos\Phi & 0 \\ 0 & 0 & 1 \end{vmatrix}$$

(in der angegebenen Reihenfolge) ist. Die rechte der beiden Matrizen stellt den Übergang zu einem vorläufigen Achsensystem dar, das durch Drehung um die Y-Achse entsteht. Der Drehwinkel ist der Winkel $\Phi$. Durch die linke Matrix wird wird nochmals um eine Achse des vorläufigen Koordinatensystems gedreht, und zwar um den Winkel $90° - \theta$. Die Drehwinkel ergeben sich aus der Darstellung des Vektors **KC** in Kugelkoordinaten im Cb-Cr-Y-System, nämlich

$$(13) \qquad KC = |KC|\{\sin\theta\cos\Phi, \sin\theta\sin\Phi, \cos\theta\}.$$

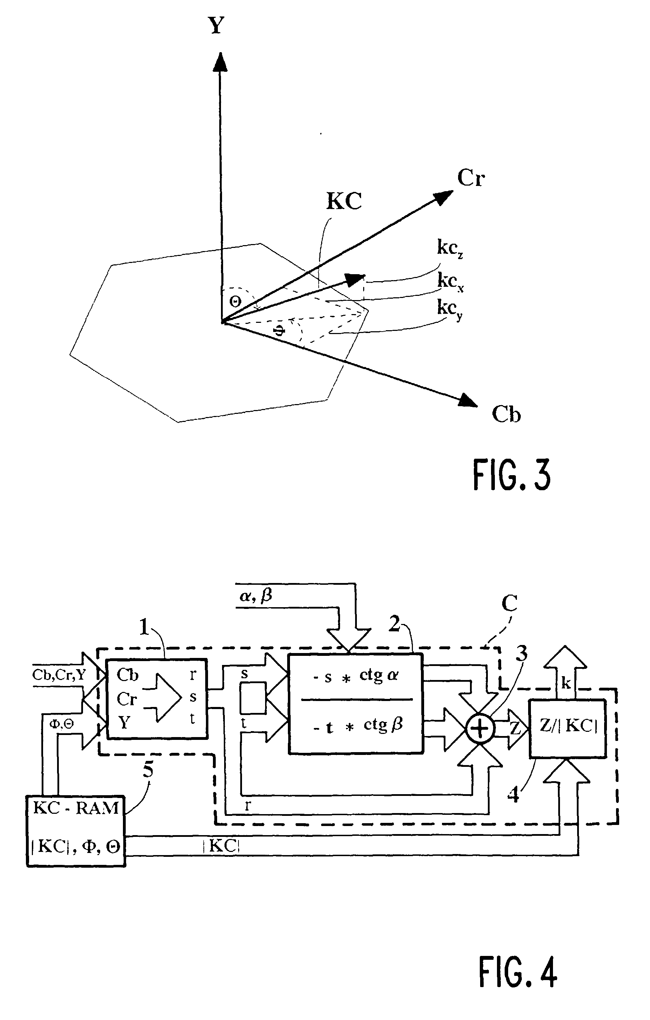

Diese Darstellung errechnet sich dann in bekannter Weise aus den kartesischen Komponenten $kc_x$, $kc_y$ und $kc_z$ des Vektors **KC** im Cb-Cr-Y-System. In Fig. 3 sind die hier und weiter unten erläuterten geometrischen Beziehungen nocheinmal anschaulich dargestellt.

Die Transformation des Vekors **KC** nach (13) mit der Matrix (11) ergibt die Darstellung von **KC** nach Formel (7), wie man sich leicht überzeugt.

Fig. 4 zeigt eine Schaltungsanordnung aus marktüblichen Bausteinen, mit der die Stanzfunktion bestimmt wird. In einem Speicher 5 sind die Parameter gespeichert, die den Vektor **KC** der Stanzfarbe nach Gleichung (13) festlegen, nämlich sein Betrag $|\mathbf{KC}|$, der Winkel $\Phi$, den seine Projektion auf die Cb-Cr-Ebene mit der Cb-Achse einschließt, und sein Winkel $\theta$ gegen die Y-Achse. Die beiden Winkel $\Phi$ und $\theta$ werden an eine Transformationseinheit 1 weitergeleitet, die selbst Bestandteil einer übergeordneten Recheneinheit C ist. Die Transformationseinheit 1 transformiert die Komponenten Cb, Cr und Y eines Farbvektors $\mathbf{p}_1$ mit der Matrix (11). Das Ergebnis sind die Komponenten r, s und t des Vektors $\mathbf{p}_1$ in einem zum ursprünglichen Achsensystem gedrehten Achsensystem.

Zur Berechnung des Zählers Z von Gleichung (10) werden die Komponenten r und s einer Einheit 2 zugeführt. An sie werden auch die Winkel $\alpha$ und $\beta$ übertragen, die die Grenzebene festlegen. Ein Addierer 3 addiert zur Komponente r die die von der Einheit 2 berechneten Produkte $-s*\mathrm{ctg}\,\alpha$ und $-t*\mathrm{ctg}\,\beta$. Das Ergebnis ist der Zähler Z von Gleichung (10). Eine Divisionseinheit 4 dividiert den Zähler Z durch den Betrag des Vektors **KC**, der der Einheit 4 vom Speicher 5 zugeführt wird. Der Quotient ist der Wert der Stanzfunktion k für den Farbvektor $\mathbf{p}_1$.

**Patentansprüche**

1. Verfahren zum Farbstanzen, bei dem die Bildpunktdaten eines ersten Videobildes mit den Daten der Bildpunkte eines zweiten Videobildes derart gemischt werden, daß Teile des ersten Videobildes den Vordergrund und das zweite Videobild den Hintergrund eines Gesamtbildes darstellen, und bei dem alle Farbvektoren, die zum Hintergrund des ersten Videobildes gehören, ein Stanzgebiet (S) in einem n-dimensionalen Farbraum bilden, gekennzeichnet durch folgende Verfahrensschritte:

   a) Der Farbraum wird durch ein [n - 1]-dimensionales Grenzgebiet (G) derart in zwei Teilräume (A,B) geteilt, daß der erste Teilraum (A) das Stanzgebiet (S) und mögliche Übergangsfarben enthält, während in den zweiten Teilraum (B) und in das Grenzgebiet (G) die Farbvektoren des ersten Videobildes fallen, die zu dessen Vordergrund gehören,

   b) für einen Farbvektor $\mathbf{p}_1$, der in den ersten Teilraum (A) fällt, wird mit einem Farbvektor **KC** des Stanzgebietes (S) der Wert einer Stanzfunktion $k(\mathbf{p}_1)$ $(0 \leq k(\mathbf{p}_1) \leq 1)$ durch die Forderung bestimmt, daß der Endpunkt des Vektors $\mathbf{p}_1 - k(\mathbf{p}_1)\mathbf{KC}$ in das Grenzgebiet (G) fällt.

2. Verfahren nach Anspruch 1,
   dadurch gekennzeichnet,
   daß der Farbvektor $\mathbf{p}_3$ eines Bildpunktes des Gesamtbildes, der zu einem Bildpunkt des ersten Videobildes mit der Übergangsfarbe $\mathbf{p}_1$ und zu einem Bildpunkt des zweiten Videobildes mit dem Farbvektor $\mathbf{p}_2$ korrespondiert, nach der Gleichung

$$p_3 = p_1 - k(p_1)KC + k(p_1)p_2$$

   bestimmt wird.

3. Verfahren nach Anspruch 1 oder 2,
   dadurch gekennzeichnet,
   daß die Punkte des Grenzgebietes (G) einer Gleichung

$$g(x) = 0$$

   genügen, der Vektor

$$p_1 - k(p_1)KC$$

   also die Gleichung

$$g(p_1 - k(p_1)KC) = 0$$

erfüllt.

4. Verfahren nach Anspruch 3,
   <u>dadurch gekennzeichnet</u>,
   daß die Gleichung

$$g(x) = 0$$

bereichsweise linear ist.

5. Schaltungsanordnung zur Bestimmung einer Stanzfunktion k nach Anspruch 3 oder 4,
   <u>gekennzeichnet durch</u>

   - Mittel (5), die dafür vorgesehen sind, einer Recheneinheit (C) Parameter zuzuführen, die

     - eine Stanzfarbe **KC** ($|KC|,\Phi,\theta$) festlegen,
     - eine Übergangsfarbe $\mathbf{p}_1$ (Cb,Cr,Y) festlegen und
     - ein Grenzgebiet ($\alpha,\beta$) festlegen, sowie

   - Bestandteile (1,2,3,4) der Recheneinheit (C), die dafür vorgesehen sind,

     - die Gleichung $g(p_1 - k(p_1)KC) = 0$ nach k aufzulösen.

## Claims

1. A chromakey method in which the pixel data of a first video picture are mixed with the pixel data of a second video picture in such a way that parts of the first video picture represent the foreground and the second video picture represents the background of an overall picture, and in which all colour vectors associated with the background of the first video picture constitute a key region (S) in an n-dimensional colour space, characterized by the following steps:

   a) the colour space is divided into two sub-spaces (A,B) by an [n-1]-dimensional boundary region (G) in such a way that the first sub-space (A) comprises the key region (S) and possible transition colours, while the second sub-space (B) and the boundary region (G) comprise the colour vectors of the first video picture which are associated with its foreground,
   b) for a colour vector $\mathbf{p}_1$ which is located within the first sub-space (A), a colour vector **KC** of the key region (S) defines the value of a keying function $k(\mathbf{p}_1)$ ($0 \le k(\mathbf{p}_1) \le 1$) by way of the requirement that the end point of the vector $\mathbf{p}_1 - k(\mathbf{p}_1)\mathbf{KC}$ is located in the boundary region (G).

2. A method as claimed in claim 1, characterized in that the colour vector $\mathbf{p}_3$ of a pixel of the overall picture, which with respect to a pixel of the first video picture corresponds to the transition colour $\mathbf{p}_1$ and with respect to a pixel of the second video picture corresponds to the colour vector $\mathbf{p}_2$, is defined in accordance with the equation

$$p_3 = p_1 - k(p_1)KC + k(p_1)p_2.$$

3. A method as claimed in claim 1 or 2, characterized in that the points of the boundary region (G) comply with an equation

$$g(x) = 0$$

so that the vector $\mathbf{p}_1 - k(\mathbf{p}_1)\mathbf{KC}$ complies with the equation

$$g(p_1 - k(p_1)KC) = 0.$$

4. A method as claimed in claim 3, characterized in that the equation

$$g(x) = 0$$

is linear per region.

5. A circuit arrangement for defining a keying function k as claimed in claim 3 or 4, characterized by

- means (5) for applying parameters to a computer (C), which parameters fix

   - a key colour **KC** ($|\mathbf{KC}|$,$\Phi$,$\Theta$),
   - a transition colour $\mathbf{p}_1$ (Cb, Cr, Y) and
   - a boundary region ($\alpha$,$\beta$), and

- components (1, 2, 3, 4) of the computer (C) provided for

   - solving the equation $g(\mathbf{p}_1 - k(\mathbf{p}_1)\mathbf{KC}) = 0$ for k.

## Revendications

1. Procédé de commutation de couleur dans lequel les données de pixel d'une première image vidéo sont mixées avec les données de pixel d'une deuxième image vidéo de telle sorte que les parties de la troisième image vidéo représentent l'avant-plan et la deuxième image vidéo le fond d'une image globale et dans lequel tous les vecteurs de couleur qui font partie du fond de la première image vidéo forment une zone de commutation (S) dans un espace de couleur n - dimensionnel,
   caractérisé par les étapes de procédé suivantes :

   a) l'espace de couleur est divisé par une zone limite [n-1]-dimensionnelle en deux espaces partiels de telle sorte que le premier espace partiel contienne la zone de commutation et les couleurs de transition éventuelles tandis que le deuxième espace partiel et la zone limite comprennent les vecteurs de couleur de la première image vidéo qui font partie de son avant-plan.

   b) pour un vecteur de couleur $\mathbf{p}_1$ qui tombe dans le premier espace partiel, la valeur d'une fonction de commutation $k(\mathbf{p}_1)$ ($0 \le k(\mathbf{p}_1) \le 1$) est déterminée avec un vecteur de couleur **KC** de la zone de commutation par l'exigence que le point final du vecteur $\mathbf{p}_1$ - $k(\mathbf{p}_1)\mathbf{KC}$ tombe dans la zone limite.

2. Procédé selon la revendication 1,
   caractérisé en ce
   le vecteur de couleur $\mathbf{p}_3$ d'un pixel de l'image complète qui correspond à un pixel de la première image vidéo avec la couleur de transition $\mathbf{p}_1$ et à un pixel de la deuxième image vidéo avec le vecteur de couleur $\mathbf{p}_1$ est déterminé selon l'équation

$$p_3 = p_1 - k(p_1)KC + k(p_1)p_2.$$

3. Procédé selon l'une des revendications 1 ou 2,
   caractérisé en ce
   que les points de la zone limite (G) répondent à une équation g (x) = 0, le vecteur $\mathbf{p}_1$ - $k(\mathbf{p}_1)$ **KC** répondant donc à l'équation $g(\mathbf{p}_1 - k(\mathbf{p}_1)\mathbf{KC}) = 0$.

4. Procédé selon la revendication 3,
   caractérisé en ce
   que l'équation g(x) = 0 est linéaire sur le plan de la zone.

5. Circuit de détermination d'une fonction de commutation k selon l'une des revendications 3 ou 4, <u>caractérisé par</u>

- des moyens (5) qui sont prévus pour amener à une unité de calcul (C) des paramètres qui
- définissent une couleur de commutation **KC** ($|\mathbf{KC}|$, $\Phi$, $\theta$),
- déterminent une couleur de transition $\mathbf{p}_1$ (Cb, Cr, Y) et
- définissent une zone limite ($\alpha,\beta$) ainsi que
- des éléments (1, 2, 3, 4) de l'unité de calcul (C) qui sont prévus pour
- résoudre l'équation g($\mathbf{p}_1$ - k($\mathbf{p}_1$)$\mathbf{KC}$) = 0 selon k.

FIG. 1

FIG. 2

FIG. 3

FIG. 4